Europäisches Patentamt

European Patent Office

Office européen des brevets

(11) Publication number: **0 493 898 A1**

# EUROPEAN PATENT APPLICATION

(21) Application number: **91311357.7**

(22) Date of filing: **05.12.91**

(51) Int. Cl.⁵: **G01D 5/26**

(30) Priority: **04.01.91 US 637575**

(43) Date of publication of application:
**08.07.92 Bulletin 92/28**

(84) Designated Contracting States:
**DE FR GB**

(71) Applicant: **Hughes Aircraft Company**
**7200 Hughes Terrace P.O. Box 45066**
**Los Angeles, California 90045-0066(US)**

(72) Inventor: **Vali, Victor**
**26035 Moulton Parkway**
**Laguna Hills, California 92653(US)**
Inventor: **Brownrigg, Patrick C.**
**3775 Flora Vista Avenue No.204**
**Santa Clara, California 95051(US)**
Inventor: **Chang, David B.**
**14212 Livingston**
**Tustin, California 92680(US)**

(74) Representative: **Colgan, Stephen James et al**
**CARPMAELS & RANSFORD 43 Bloomsbury**
**Square**
**London WC1A 2RA(GB)**

(54) **System for detecting changes in temperature and pressure.**

(57) A system adapted for attachment to a device that undergoes changes in temperature and pressure, and for detecting changes in temperature and pressure in the device comprises a mechanism for attaching the system to the device and an optic device that includes pressure-responsive, temperature-responsive optic fiber that produces signals representative of temperature changes over a first optical frequency band, and of pressure changes over a second, distinctly different optical frequency band, or two or more optical devices, at least one including a pressure-responsive optic fiber, and at least one including a temperature-responsive optic fiber.

FIG. 2.

## BACKGROUND OF THE INVENTION

### 1. Field of the Invention

This invention relates to systems adapted for accurately detecting changes in temperature and in pressure in devices that undergo such changes. These systems include optic fibers that are highly responsive to changes in temperature and in pressure in devices to which they are attached, and that maintain their accuracy over a wide temperature and pressure range, even in environments that contain high electromagnetic interference fields.

### 2. Description of Prior Art

For some time, a need has existed for a system that can accurately measure temperature and pressure, in a device that undergoes such changes, over a wide temperature and pressure range in environments that are chemically or electrically adverse. Examples of such environments are those surrounding the combustion chamber of an engine and those which contain strong electromagnetic radiation fields. Piezoelectric transducers have been used in such environments, but are adversely affected by the high voltages and currents appearing in such environments, by electromagnetic interference fields, or both.

## SUMMARY OF THE INVENTION

This invention relates to systems adapted for attachment to devices that undergo changes in temperature and pressure, and particularly to devices that undergo changes over wide ranges of temperature and pressure, operate at high temperatures and pressures, or both. These systems include means for attaching the system to the devices that undergo such changes, and optic means such as, for example, interferometer means, that include pressure and temperature responsive optic fibers. In preferred embodiments, these optic fibers produce light signals representative of changes in temperature over a first optical frequency band, and of changes in pressure over a second, distinctly different optical frequency band. In some embodiments, however, the system can include two or more such optic means, one comprising pressure-responsive optic fibers, the other, temperature-responsive optic fibers.

The optic means, in preferred embodiments, comprises interferometer means including a light source, and preferably a laser light source, connected to an optic fiber beam splitter. The optic fiber beam splitter, in turn, is connected to an optic fiber path that includes a reference optic fiber coil and a sensor optic fiber coil. Preferably, the reference coil and sensor coil each comprise a pressure-responsive, temperature-responsive optic fiber that produces light signals representative of temperature changes over a first optical frequency band, and of pressure changes over a second, distinctly different optical frequency band. The interferometer means also includes, in preferred embodiments, a detector means connected to the optic fiber path that includes the reference coil and sensor coil. In preferred embodiments, the detector comprises one or more photodetectors that accurately detect changes in optical frequencies in response to changes in pressure or temperature or both.

In preferred embodiments, the interferometer means is responsive to, and accurately detects changes in temperature over a wide range, preferably over a range of from about minus 40° to about plus 250° centigrade, and accurately determines changes in pressure over a wide range, preferably from about 10 to about 3,000 psi. The degree of accuracy in detecting pressure changes is preferably in the range of about 1% to 10%. The degree of accuracy in detecting changes in temperature is preferably in the range of about 1% to 10%.

In some embodiments, the systems of this invention comprise a plurality of interferometer means, at least one including a pressure-sensitive optic fiber coil, and at least one including a temperature-sensitive optic fiber coil.

Among the devices that undergo changes in temperature and pressure to which the interferometer means can be attached are combustion chambers, such as internal combustion chambers in motor vehicles. Combustion chambers in motor vehicles are exposed to, and operate in environments that have high electromagnetic interference, and experience high voltage and current changes, such as those caused by spark plugs. In these environments, the sensor coil is preferably attached to the wall of the combustion chamber or cylinder, and the reference coil, and balance of the interferometer means, is placed remotely from the combustion chamber to isolate the reference coil and balance of the interferometer means from the chamber.

In preferred embodiments, the optic fibers in the interferometer means are responsive to both pressure and temperature. Preferably, these fibers produce signals representative of temperature changes over a first optical frequency band, and of pressure changes over a second, distinctly different optical frequency band. Such fibers, in preferred embodiments, satisfy the condition dn/dT, where dn/dT is approximately equal to $-\alpha n$ and $\alpha$ is the effective thermal expansion coefficient of the optic fiber. In such fibers, a 1° C change in temperature can result in a fringe shift in the range of about 1 to about 10 fringes, while a pressure change of one atmosphere can result in a fringe shift of about 20 to about 200 fringes. Since these fringe changes can be measured to an accuracy of $10^{-4}$, accuracy in the range of about 1% to about 2%, in preferred embodiments, is feasible.

This invention also relates to methods for detecting changes in temperature, pressure or both in devices that undergo changes in temperature, pressure or both comprising attaching, to such a device, a device such as an interferometer including a pressure-sensitive, temperature-sensitive optic fiber that produces signals representative of temperature changes over a first optical frequency band, and of pressure changes over a second optical frequency band, or two or more such devices, one including temperature-responsive optic fibers, the other pressure-sensitive optic fibers; monitoring changes in pressure, changes in temperature or both from the signals generated by the fibers, and adjusting the conditions in the device that cause changes in temperature, pressure or both in response to the detected changes. In preferred embodiments, these methods, as applied to detecting temperature or pressure changes or both in a combustion chamber, include attaching to the combustion chamber a sensor optic fiber coil that produces signals representative of temperature and pressure changes over different optical frequency bands, or two different sensor optical fiber coils, one responsive to pressure, the other responsive to temperature, and monitoring changes in pressure and temperature in the device through interferometer means that include such sensor coils.

## BRIEF DESCRIPTION OF THE DRAWINGS

The systems and methods of this invention can be better understood by reference to the drawings, in which:

Fig. 1 is a schematic diagram of an optic fiber interferometer useful in systems adapted for detecting changes in temperature and pressure in devices that undergo such changes;

Fig. 2 shows the interferometer embodiment of Fig. 1 attached, in schematic form, to an internal combustion engine; and

Fig. 3 is a schematic diagram of another embodiment of an optic fiber interferometer useful in systems adapted for detecting changes in temperature and pressure in devices that undergo such changes.

## DESCRIPTION OF THE PREFERRED EMBODIMENTS

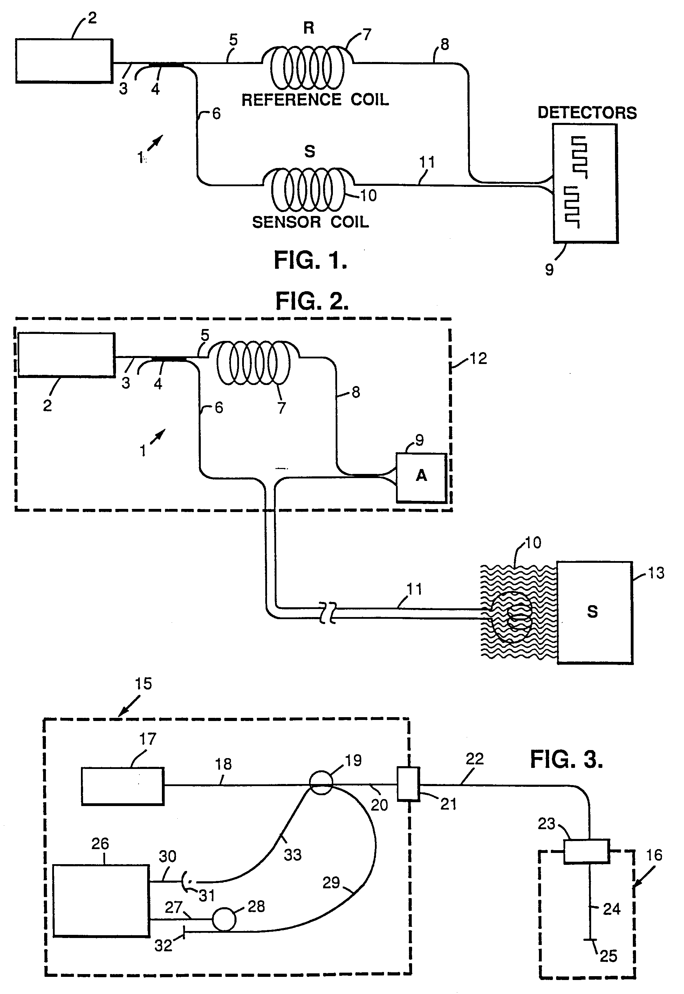

Fig. 1 shows an optic fiber interferometer, here a Mach-Zehnder interferometer, that includes laser light source 2 connected to optic fiber path 3. Path 3 is connected to fiber beam splitter 4 which divides the light into two paths, a first path 5 and a second path 6. Light on path 5 passes through reference coil 7 and then through path 8 to detector 9. Light on path 6 passes through sensor coil 10, and then through path 11 to detector 9. At detector 9, differences in the light signals emerging from reference coil 7 and reference coil 10 appear as fringe shifts in light that are a function of the changes in temperature, pressure or both imposed upon sensor coil 10.

Fig. 2 shows the interferometer 1 of Fig. 1, in schematic diagram form, attached to an internal combustion engine to determine changes in temperature and pressure in the cylinder of such an engine during operation. Here, interferometer 1 is attached to engine firewall 12. Sensor coil 10 is attached to the outer wall of a cylinder in the internal combustion engine, and is responsive to changes in temperature and pressure in that cylinder. These changes appear on path 11, and are detected at detector 9 as interference patterns, i.e. fringe shifts, when the light on path 11 reaches and interferes with the light on path 8.

Fig. 3 shows an embodiment that is an alternative to the embodiment shown in Figs. 1 and 2. In this embodiment, opto-electronic module 15 includes laser light source 17 connected to fiber optic path 18 and beam splitter 19. Beam splitter 19 is connected by path 20 to connector 21. Connector 21 is connected via path 22 to engine block connector 23.

Engine block 16 includes at least one cylinder wall into which optic fiber 24 is placed and sealed. Optic fiber 24 terminates in polished mirror surface 25 which minimizes light leakage from fiber 24.

Opto-electronic module 15 also includes signal processor 26. Processor 26 is connected by electrical path 27 to lead/zirconium titanate fiber stretcher 28. Stretcher 28 is connected to beam splitter 19 by fiber optic path 29. Path 29 includes mirrored or polished end surface 30, which minimizes light leakage from fiber 29. Processor 26 is also connected to beam splitter 19 by electrical connector path 30, photo diode detector 31, and fiber optic fiber light path 33.

In operation, coherent light from laser 17 passes through fiber optic connector 18 to beam splitter 19. From beam splitter 19, light travels on fiber optic path 20 through connector 21, fiber optic path 22, and fiber optic connector 23 into fiber optic fiber sensor 24, which is embedded in a cylinder wall of engine block 16. Light signals representative of changes in temperature, pressure or both, in the cylinder wall where optic fiber 24 is embedded, pass through connector 23, fiber optic path 22, connector 21, optic fiber 20, beam splitter 19, and fiber optic path 33 to photodiode 31, which delivers an electrical signal on path 30 to signal processor 26. The signal on path 30 changes in proportion to changes in temperature, pressure or both that appear as changes in the light signals on optic fiber 24.

Laser light from laser source 17 and fiber optic path 18 and beam splitter 19 also passes fiber optic path 29 to stretcher 28. Processor 26 applies an appropriate voltage on path 27 to stretcher 28. Stretcher 28 delivers a reference light signal to photodiode 31 that maintains photodiode 31 at the appropriate level, preferably half-way between maximum intensity and minimum intensity, to produce the optimum sensitivity in photodiode 31.

**Claims**

1. A system adapted for attachment to a device that undergoes changes in temperature, pressure or both and for detecting changes in temperature, pressure or both in said device comprises means for attaching said system to said device, and optic means including pressure-sensitive, temperature-sensitive optic fibers that produce light signals representative of changes in temperature over a first optical frequency band, and of changes in pressure over a second, different optical frequency band.

2. The system of claim 1 wherein said optic means comprises, in said interferometer means including a laser light source, connected to a fiber beam splitter, said beam splitter being connected to an optic fiber path including a reference coil comprising said pressure-responsive, temperature-responsive optic fiber, a sensor coil comprising said pressure-responsive, temperature-responsive fiber, and a photodetector connected to the outputs of said reference coil and said sensor coil.

3. The system of claim 1 wherein said device is an internal combustion chamber that undergoes changes in temperature and pressure.

4. The system of claim 1 wherein said optic means has the capacity to measure temperature changes over a range of about -40°C to about 250°C, and pressure changes over a range of about 10 psi to about 3,000 psi with an accuracy in the range of about 1% to about 10% in measuring temperature and pressure changes.

5. A system adapted for attachment to a device that undergoes changes in temperature, pressure or both and for detecting changes in temperature, pressure or both in said device comprising means for attaching said system to said device, and optic means including pressure-responsive optic fibers, and optic means including temperature-responsive optic fibers.

6. The system of claim 5 wherein said pressure-responsive optic fibers are included in an interferometer means that also includes a laser light source connected to a fiber beam splitter, said beam splitter connected to an optic fiber path including a reference coil and two separate sensor coils, said coils being connected to a photodetector.

7. A method for detecting changes in temperature, pressure or both in a device that undergoes such changes comprising attaching to said device a system that includes optic means comprising pressure-responsive, temperature-responsive optic fibers that produce signals representative of temperature changes over a first optical frequency band, and of pressure changes over a second, distinctly different optical frequency band; subjecting said optic means to changes in temperature, pressure or both from said device; and detecting changes in temperature, pressure or both from said optic means.

8. The method of claim 7 further comprising adjusting the conditions within said device to produce a desired temperature, pressure or both in response to signals from said optic means.

9. A method for detecting changes in temperature, pressure or both in a device that undergoes such changes comprising attaching to said device a system that includes optic means comprising pressure-responsive optic fibers, and optic means including temperature-responsive optic fibers, said optic means responding to temperature changes, and to pressure changes, respectively; subjecting said optic means to changes in temperature, pressure or both from said device; and detecting changes in temperature, pressure or both from said optic means.

10. The method of claim 9 further comprising adjusting the conditions within said device to produce a desired temperature, pressure or both in response to signals from said optic means.

**11.** A system adapted for attachment to a device that undergoes changes in temperature and for detecting changes in temperature in said device comprises means for attaching said system to said device, and optic means including temperature-responsive optic fibers that produce light signals representative of temperature changes in said device.

**12.** The system of claim 11 further comprising means for adjusting the conditions within said device to produce a desired temperature in response to signals from said optic means.

**13.** A system adapted for attachment to a device that undergoes changes in pressure and for detecting changes in pressure in said device comprises means for attaching said system to said device, and optic means including pressure-responsive optic fibers that produce light signals representative of pressure changes in said device.

**14.** The system of claim 13 further comprising means for adjusting the conditions within said device to produce a desired pressure in response to said light signals from said optic means.

**15.** The system according to any of claims 11 to 14 wherein said optic means is an interferometer.

R

5       7       8

2

3   4

REFERENCE COIL

6

S

1

10

SENSOR COIL

11

DETECTORS

9

**FIG. 1.**

**FIG. 2.**

5

3   4

2

6

7

8

1

9

A

12

10

11

S

13

15

17

18       19

20

22

**FIG. 3.**

21

26

30

33

23

31

29

16

27   28

24

32

25

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | WO-A-8 601 286 (UNITED TECHNOLOGIES CORPORATION) <br><br> * claim 3; figures * <br> --- | 1,5,7,9, 11,13 | G01D5/26 |
| X | EP-A-0 377 549 (KLEINERMAN) <br><br> * page 16, line 19 - line 40; figure 9 * <br> --- | 1,5,7,9, 11,13 | |
| X | US-A-4 523 092 (NELSON) <br><br> * abstract; figure 1 * <br> --- | 1,5,7,9, 11,13 | |
| A | EP-A-0 163 022 (BODENSEEWERK GERÄTETECHNIK GMBH) <br> --- | | |
| A | PATENT ABSTRACTS OF JAPAN <br> vol. 8, no. 147 (P-285)(1584) 10 July 1984 <br> & JP-A-59 046 805 ( DIESEL KIKI K.K. ) 16 March 1984 <br> * abstract * | | |
| | ----- | | **TECHNICAL FIELDS SEARCHED (Int. Cl.5)** |
| | | | G01D |

The present search report has been drawn up for all claims

| Place of search | Date of completion of the search | Examiner |
|---|---|---|
| THE HAGUE | 09 APRIL 1992 | BATTESON A. |

EPO FORM 1503 03.82 (P0401)